# EUROPEAN PATENT APPLICATION

(11) **EP 4 538 963 A1**
(43) Date of publication of application: **16.04.2025**
(21) Application number: 23203008.0
(22) Date of filing: 11.10.2023
(51) Int. Cl.: G06T 7/00, G06T 7/12

(54) **METHOD FOR QUANTIFYING IRREGULARITIES OF A SURFACE OF AN ANATOMICAL REGION OF A PATIENT**

(71) Applicant: Guerbet, 93420 Villepinte (FR); Université Paris Cité, 75006 Paris (FR); Centre National de la Recherche Scientifique, 75016 Paris (FR)
(72) Inventor: YANG, Sisi, 93420 VILLEPINTE (FR); BÔNE, Alexandre, 75009 PARIS (FR); GLAUNÈS, Joan Alexis, 75006 PARIS (FR)
(74) Representative: Plasseraud IP

(57) **Abstract**

The invention relates to a method implemented by computer means for quantifying irregularities of a surface of an anatomical region of a patient in at least one medical image, said method comprising the following steps:
(a) obtaining at least one medical image representing said anatomical region,
(b) segmenting said anatomical region or at least a part of said anatomical region,
(c) detecting the actual contour of said anatomical region from said segmented anatomical region,
(d) computing a smoothed contour of said anatomical region based on said actual contour,
(e) calculating a score based on the distance between the actual contour and the smoothed contour.

## Description

### FIELD OF THE INVENTION

The present invention relates to a method implemented by computer means for automatically and objectively quantifying irregularities of a surface of an anatomical region of a patient in at least one medical image.

### BACKGROUND OF THE INVENTION

The present invention improves a method which assists expert users (i.e., radiologists) in the computation of a liver surface nodularity score (LSN score), from medical images, such as CT scans.

The article "Smith AD et al., Liver Surface Nodularity Quantification from Routine CT Images as a Biomarker for Detection and Evaluation of Cirrhosis. Radiology. 2016 Sep ; 280(3):771-81" discloses a method to compute the liver surface nodularity (LSN) score as the average of the distances between the liver contours and a smoothed polynomial curve mimicking the expected normal liver surface. This method requires manual tracing by the radiologist of a region of interest (ROI) on the surface of the liver.

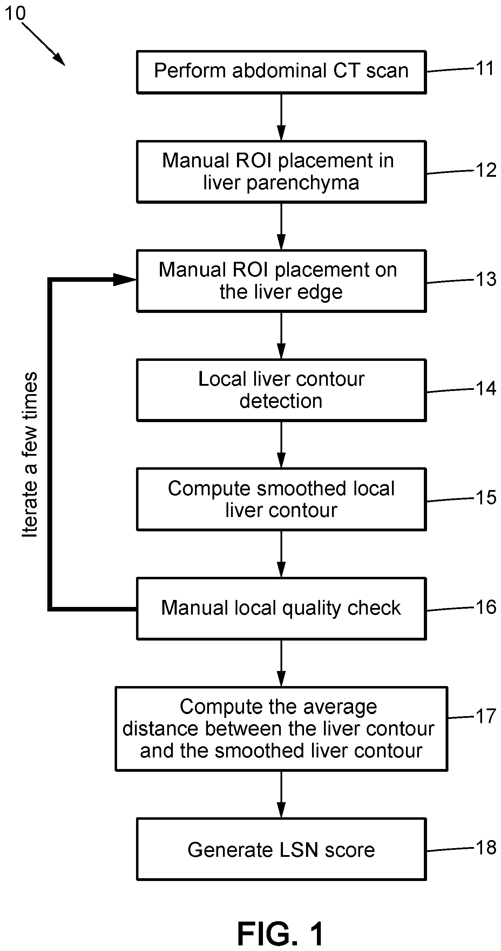

Figure 1 illustrates a flow chart 10 describing such prior art method.

In step 11, an abdominal CT scan is performed, and an 3D image is generated from the scan. In step 12, a radiologist reviews the image generated from the CT scan and manually marks (e.g., circles, boxes, ...) an area inside of the liver to indicate a "region of interest" (ROI). Next, in step 13, the radiologist manually draws an area around the surface (or edge) of the liver.

Liver contour detection is performed in step 14. The prior art method employs an automated process to detect the liver contour, resulting in an image with a line delineating the edges of the liver.

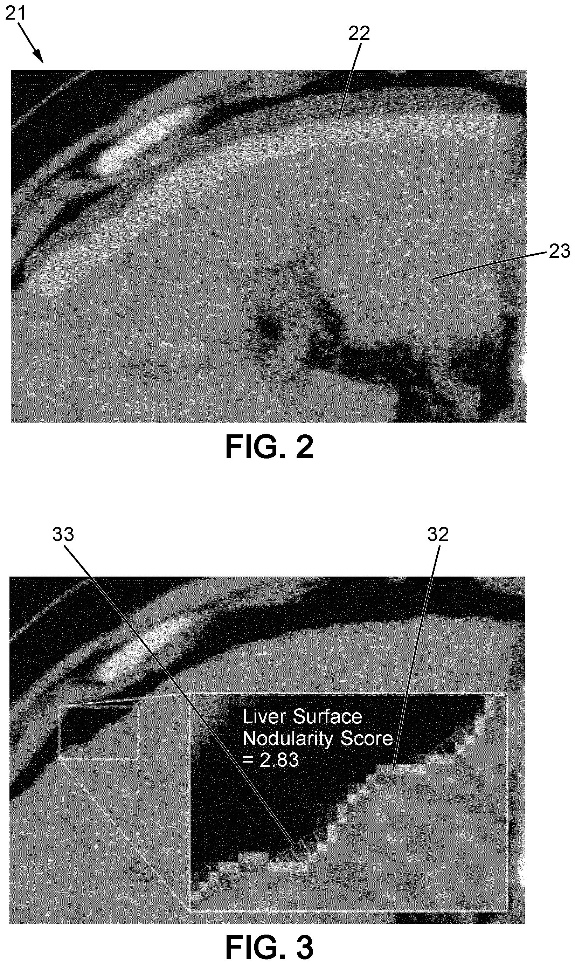

Figure 2 illustrates an example of said generated image 21 with a line 22 manually inserted by a radiologist over the edge of the liver 23. Said prior art method only allows for the detection of a portion of the outer liver contour (i.e., a local portion) because specific areas where the automatic detection does not work properly must be avoided (e.g., said method creates artifacts). These areas include contacts with the abdominal wall, areas with natural sharp turns or fissures, image artifacts, or the dome of the liver.

Next, at step 15, the image generated in step 14 is used to automatically generate a "smoothed" liver contour, which is illustrated in Figure 3 by the line 33. Figure 3 also includes the computer generated line 32 which outlines the liver contour.

At step 16, the radiologist manually checks the region of interest (ROI) by scrolling slice by slice of said 3D image to ensure the automatic process has correctly detected the contour of the liver inside of the ROI and plotted the correct distances to calculate. If some errors of detection of contours or of plotted distances appear on a slice, the radiologist will then need to cancel the measurements on this specific slice.

After the radiologist has manually identified the ROI over the liver surface, the liver's edge is automatically detected on the selected section and on adjacent continuous sections by propagating the drawn region of interest. The number of adjacent slices is defined by users. Usually, the radiologist needs the calculation of distances on multiples slices to get a reliable LSN score.

At step 17, the average distance between the liver contour (line 32 on figure 3) and the smooth liver contour (line 33 on figure 3) is computed. Next, during step 18, a LSN score is generated based on the calculated average distance.

It appears that there are situations where the contrast between the hepatic (e.g., liver) surface and its environment is not optimal on the image obtained by CT scan, making the ROI (region of interest) placement difficult or restricting the size of the ROI. As a result, deriving a LSN score from a medical image is both time-consuming and highly demanding in terms of expertise. Furthermore, the computed LSN score is subjective, in the sense that different users, or the same user at different times, would obtain different results.

The present document proposes a method for automatically and objectively quantifying irregularities of a surface of an anatomical region (such as but not limited to an organ) of a patient in at least one medical image, without the need for interaction nor supervision by expert users (i.e. radiologists), that can address the above-mentioned problems.

### SUMMARY OF THE INVENTION

To that aim, the present document proposes a method implemented by computer means for quantifying irregularities of a surface (e.g., the inner and/or outer surface) of an anatomical region (or part of an anatomical region) of a patient in at least one medical image, said method comprising the following steps:
(a) obtaining at least one medical image representing said anatomical region, and automatically performing:
(b) segmenting said anatomical region or at least a part of said anatomical region,
(c) detecting the actual contour of said anatomical region from said segmented anatomical region,
(d) computing a smoothed contour of said anatomical region based on said actual contour,
(e) calculating a score based on the distance between the actual contour and the smoothed contour.

A medical image may be defined as a visual representation of internal body structures or functions acquired using various imaging modalities. These images are generated through the use of hardware and software systems that capture and process data, producing two-dimensional (2D) or three-dimensional (3D) images that aid in the diagnosis, treatment planning, and monitoring of various medical conditions. Medical images typically contain information about tissue density, composition, and function and are interpreted by radiologists, physicians, or other medical professionals with specialized training in image analysis.

Said image may be a 3D image. Said 3D image may be composed of a stack of slices, each slice forming a 2D image. Each slice represents a thin cross-section of the patient's anatomy, and when these slices are arranged in order, they form a 3D reconstruction of the patient's anatomy.

A medical image may take many different forms, depending on the imaging modality used and the type of medical condition being investigated. According to the present document, said image may be a CT-scan image.

Said method may be applied to other modalities as well, such as X-ray Radiography, Magnetic Resonance Imaging (MRI), Ultrasound (Sonography), Positron Emission Tomography (PET), or Fluoroscopy for example.

Also known as computed tomography scans, CT scan images are 3D images created by combining a series of X-ray images taken from different angles around the body. CT scans can provide detailed information about the internal structure and composition of organs, bones, and tissues.

Irregularity refers to any deviation or departure from a regular or normal pattern or shape. In medical contexts, it may typically signify an abnormality or anomaly in the structure, texture, or contour of an anatomical region or tissue that differs from what is considered typical or healthy. Irregularities can encompass a wide range of issues, such as lumps, bumps, lesions, roughness, or unevenness on the surface of an anatomical region.

The surface of an anatomical region refers to the outermost layer or boundary of a specific bodily anatomical region. Anatomical regions within the human body have surfaces that can vary in texture and appearance depending on their normal function and any potential health conditions. Irregularities of said surface may be indicative of various medical concerns.

Said anatomical region may be an organ. Said organ may be a liver of a patient. The above-mentioned method may be applicable to other organs such as a kidney, a pancreas, a stomach, a spleen, a lung, or a heart, for example, or parts of an organ, such as a ventricle or a lesion, for instance.

Segmentation may refer to the process of dividing or partitioning an input image or data into multiple segments or regions (set of pixels or voxels) based on certain criteria, such as color, texture, intensity, shape, or other features. More precisely, image segmentation is the process of assigning a label, a class or a category to every pixel or voxel in an image such that pixels or voxels with the same label share certain characteristics (here the class of said anatomical region). The goal of segmentation may be to identify and isolate different objects or regions of interest within an image or data, so that they can be analyzed, processed or classified separately.

Several algorithms and techniques may be used for segmentation, including thresholding, clustering, edge detection, region growing, and deep learning-based approaches.

The wording "automatically" means that the process is performed without human intervention or manual effort. It implies that a computer program, algorithm, or system is used to carry out the task, relying on predefined rules, patterns, or algorithms. For example, in image processing, the automatic segmentation of an object means using computer vision algorithms to identify and delineate said object within an image without requiring human operators to manually trace or outline such object.

At least the steps (b), (c), (d) and (e) are performed automatically, i.e., without intervention of an operator (e.g. a radiologist). Step (a) may also be performed automatically.

The actual contour refers to the outline or boundary that defines the external shape or edge of the anatomical region as seen in an image.

The smoothed contour refers to a representation of said actual contour that has been modified to reduce jaggedness or irregularities.

The smoothed contour may be obtained by applying a Savitzky-Golay filter on said actual contour.

A Savitzky-Golay or SavGol filter is a digital signal processing technique that may be used to smooth or filter noisy data, such as a contour in an image. The Savitzky-Golay filter works by fitting a polynomial of a specified order to a small window of data points and then using this polynomial to estimate the smoothed value at the center point of the window. This process is repeated for each point in the contour, effectively smoothing the entire contour.

The distance between the actual contour and the smoothed contour of an anatomical region in a medical image can reveal valuable information about irregularities or anomalies in the anatomical region's shape and structure. More particularly, when the distance between the actual contour and the smoothed contour is relatively small and consistent, it suggests that the anatomical region has a relatively regular and smooth shape. However, if the distance varies significantly or exhibits spikes or deviations from the smoothed contour, it may indicate the presence of irregularities or anomalies.

During step (b), segmentation may be performed using a Unet model. The nnUnet framework may be used. Said framework is known from "nnU-Net: Self-adapting Framework for U-Net-Based Medical Image Segmentation, Fabian Isensee et al., arXiv:1809.10486".

A U-Net is a convolutional neural network (CNN) architecture introduced by the article "Olaf Ronneberger et al., U-Net: Convolutional Networks for Biomedical Image Segmentation, arXiv:1505.04597".

The U-Net architecture is characterized by its U-shaped architecture, which consists of an encoder (contracting path) and a decoder (expansive path). A key innovation of the U-Net architecture is the use of skip connections, also known as residual connections. These connections allow the network to combine high-level semantic information from the encoder with detailed spatial information from the decoder.

During step (c), the detection of the actual contour of said anatomical region may be performed using a marching squares algorithm. Such algorithm is a special case of the marching cubes algorithm (Lorensen, William and Harvey E. Cline. Marching Cubes: A High Resolution 3D Surface Construction Algorithm. Computer Graphics SIGGRAPH 87 Proceedings, 21(4) July 1987, p. 163-170). Such algorithm may be performed using the contour finding function of the Scikit-image library (skimage.measure.find_contours, https://scikit-image.org/docs/stable/auto examples/edqes/plot contours.html).

Said contour may be a global anatomical region contour, i.e., a contour that encompasses entirely said anatomical region.

During step (c), inappropriate parts of said contour are excluded from said detected actual contour, to obtain a remaining actual contour, said inappropriate parts comprising parts of contour surrounding some parts of the anatomical region, parts of the contour that has a curvature above a defined threshold, and/or parts of the contour that has a low contrast between the inner anatomical region part and the outer anatomical region part (i.e. low contrast with respect to the neighboring anatomical structures).

For example, the contour of the inner part of a liver may be considered an inappropriate part of the contour in the case of the liver. The removal of such inner part of the contour may be obtained by dividing the contour into two parts: the inner part of the contour and the outer part of the contour.

The inner part of the contour may be the part of the contour having the largest distance with regard to a reference point in the image. The outer part may be the part of the contour having the smallest distance with regard to a reference point in the image. The reference point may a corner of the image, for example the top left corner of said image.

The contrast at a specific part of the contour may be calculated by the difference or ratio of intensities between the pixels or voxels in a zone located outside said anatomical region (i.e. outside said contour) and the pixels or voxels located in a zone located inside said anatomical region.

More specifically, the contrast may be based on the mean intensities of the pixels in the corresponding surrounding zones outside and inside said anatomical region, i.e. outside and inside the contour.

The objective of removing low-contrast portions of the contour is twofold: first, to eliminate the areas where fissures are present within the anatomical regions, and second, to exclude the regions where the anatomical region interfaces with adjacent body structures.

Said outside and inside zones may be obtained through dilatation or erosion of said contour.

Dilation and erosion are two morphological operations applied to the binary representation of contours. In particular, dilation is a morphological operation that may be used to expand the contour's shape by adding pixels or voxels to the boundary. Erosion is the counterpart of dilation. It is a morphological operation that may be used to shrink the contour and modify said contour's shape by removing pixels from the boundary.

The curvature of a contour refers to the measure of how much the contour deviates from being perfectly straight at a given point. It provides information about the local shape of the contour.

After removing said inappropriate part of said contour, a further segmentation of the anatomical region may be performed on a region of interest surrounding the remaining actual contour, the actual contour being updated based on a detection of said actual contour from said further segmented anatomical region.

The further segmentation may be performed by Chan-Vese segmentation. The Chan-Vese segmentation algorithm is designed to segment objects without clearly defined boundaries. This algorithm is based on level sets that are evolved iteratively to minimize an energy, which is defined by weighted values corresponding to the sum of differences intensity from the average value outside the segmented region, the sum of differences from the average value inside the segmented region, and a term which is dependent on the length of the boundary of the segmented region. Such segmentation is known from "An Active Contour Model without Edges, Tony Chan and Luminita Vese, Scale-Space Theories in Computer Vision, 1999". Other segmentation methods may also be performed such as thresholding (e.g. Otsu's method) which separates an image into two classes, foreground and background, based on the grayscale intensity values of its pixels. Otsu's method uses the grayscale histogram of an image to detect an optimal threshold value that separates two regions with maximum inter-class variance.

The marching squares algorithm may then be used on the area segmented by Chan-Vese segmentation to obtain the updated contour. Another segmentation method may also be used.

In the case of a 3D image, step (b) may be performed on the 3D image and steps (c), (d) and (e) may be performed on each 2D slice of a plurality of the slices of the 3D image.

Said plurality of slices may be selected from all the slices of the 3D images.

For instance, the selection of only the relevant slices, defined as those comprising the entirety or a portion of the slices where anatomical region detection has occurred through segmentation, can be considered. These selected slices may be associated with a specific position along a designated axis, known as the 'z-axis.' In cases where the range of slices between a slice with a z-value denoted as 'z0' and another slice with a value 'zn' is spanned by anatomical region detection, the identification of a central slice can be facilitated as the one with a z-value equal to (z0 + zn) 12. Within this range, a choice can be made to focus on only a segment of the slices, such as limiting the selection to slices falling between 30% and 90% of the entire range. This selection process may be centered on the central slice for the sake of consistency and relevance.

A quality check may be performed by an operator, for example a radiologist, between steps (d) and (e). During said quality check, the operator may review manually the selected actual contour and the distance between said actual contour and the corresponding smoothed contour.

The distance between the actual contour and the smoothed contour may be determined using the Euclidean distance. For each point 'p' on the actual liver contour, the distance to each point on the smoothed curve can be computed, and the point on the smoothed curve with the shortest distance from 'p' can be selected as the projection of 'p,' indicating the theoretical location of that point if the anatomical region were healthy.

A summary statistic may be computed. This summary statistic may include generating a plot which pictures distribution of all distances (mean, median, minimal and maximal distances, deciles, percentiles).

The score calculated based on the distance between the actual contour and the smoothed contour can be a liver surface nodularity score

Said score may serve as a valuable tool for assessing the likelihood of disease. For instance, when the score is very low, it suggests that the patient is unlikely to have liver disease, thus obviating the need for a biopsy for example. Moreover, in the case of a liver, the score may exhibit a correlation with the Metavir classification.

Such score may contribute value by standardizing the terminology used in describing surface nodularity in radiological reports, facilitating effective communication among radiologists and other healthcare professionals involved in a patient's treatment planning. Furthermore, standardized reporting metrics can be instrumental in tracking changes in the same patient's condition overtime.

The present document also proposes a computer software, comprising instructions to implement at least a part of the method according the present document when the software is executed by a processor.

The present document also proposes a computer device comprising:
- an input interface to receive medical images,
- a memory for storing at least instructions of a computer program according to the present document,
- a processor accessing to the memory for reading the aforesaid instructions and executing then the method according to the present document,
- an output interface to provide an indication based on said score.

The present document also proposes a computer-readable non-transient recording medium on which a computer software is registered to implement the method according to the present document, when the computer software is executed by a processor.

### BRIEF DESCRIPTION OF THE DRAWINGS

Other features, details and advantages will be shown in the following detailed description and on the figures, on which:
- figure 1 illustrates a flow-chart of an embodiment of the method according to the prior art,
- figures 2 and 3 represents images illustrating two different steps of the flowchart of figure 1,
- figure 4 schematically shows an example of a computer device according to the present document,
- figure 5 illustrates a flow-chart of an embodiment of the method according to the present document,
- figure 6 illustrates an image of a part of a liver with the inner zone and the outer zone of the liver and the detected contour,
- figure 7 illustrates an image of a part of a liver with an updated contour of the liver,
- figure 8 illustrates a flow-chart of the generic method according to the present document.

The annexed drawing includes meaningful colors. Although the present application is to be published in black and white, a colored version of the annexed drawing was filed before the Office.

### DETAILED DESCRIPTION OF A PREFERRED EMBODIMENT

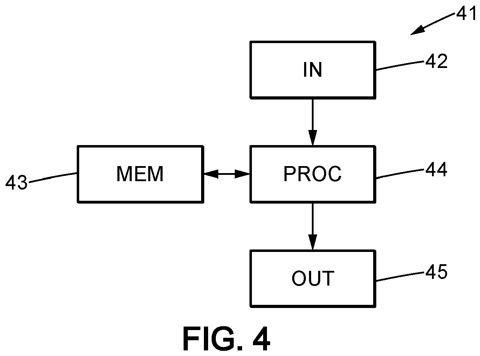

Figure 4 schematically shows an example of a computer device 1 according to the invention. Said computer device 1 comprises:
- an input interface 2 to receive medical images,
- a memory 3 for storing at least instructions of a computer program,
- a processor 4 accessing to the memory 3 for reading the aforesaid instructions and executing the method according to the present document,
- an output interface 5 to provide an indication based on the above-mentioned score.

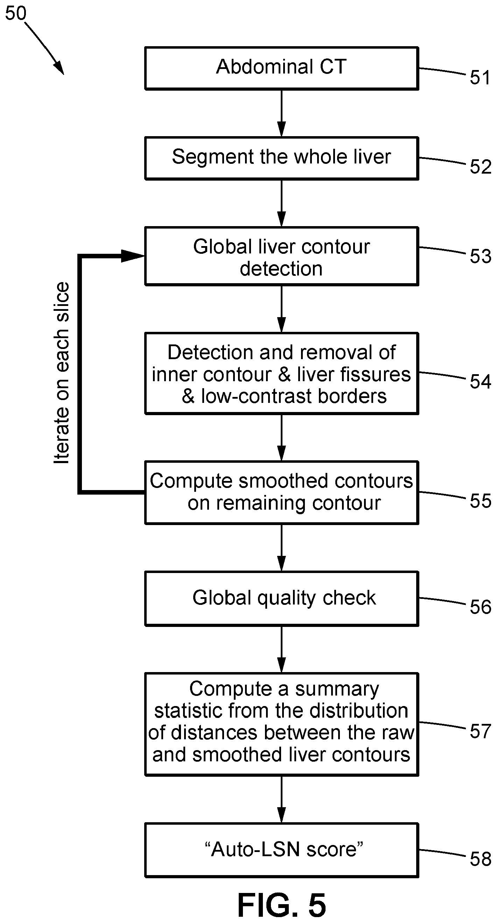

Figure 5 is a flow chart 50 illustrating the method according to an embodiment of the present document.

In step 51, an abdominal CT scan is performed, and an 3D image is generated from the scan. In step 52, the whole liver is segmented using a pretrained U-net.

Said U-net has been trained on IRCAD and LiTS public datasets. This U-net may be the U-net described in the article "F. Isensee et al., nnU-Net: a self-configuring method for deep learning-based biomedical image segmentation, Nat Methods, 18(2), 203-211 (2021)". Said U-net may be trained with the dice and cross-entropy loss function using stochastic gradient descent with Nesterov momentum and a geometrically decaying learning rate.

Then, for each slice of said 3D image, the following steps 53 to 55 are successively performed.

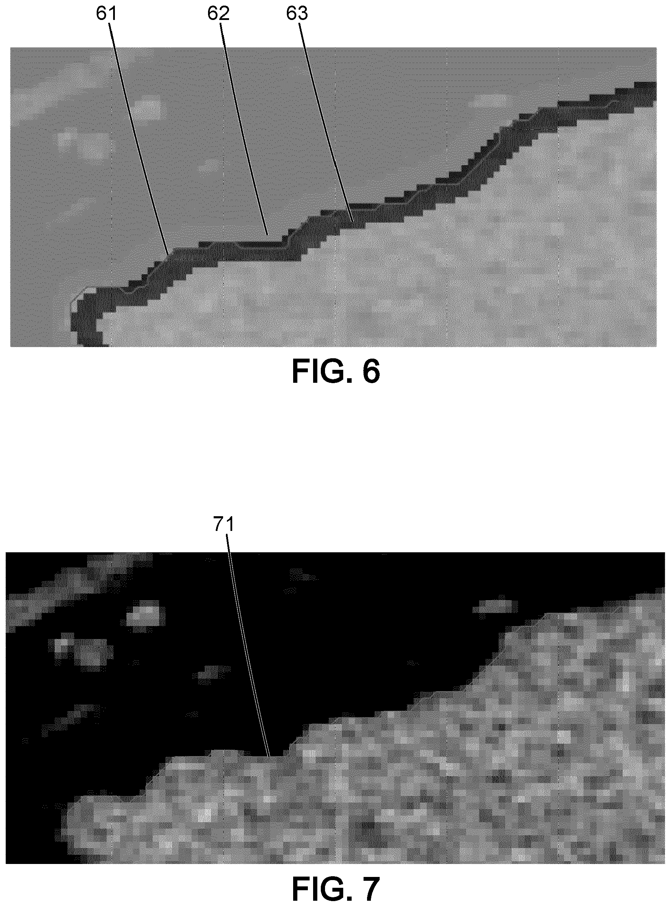

In step 53, the actual global liver contour (line 61, in Figure 6) is detected from the segmented liver, said detection being performed using a marching squares algorithm. Said contour may be a global anatomical region contour, i.e., a contour that encompass entirely said anatomical region.

Then, in step 54, all inappropriate parts or areas are removed from the global actual contour in order to select only the relevant parts. To this aim, step 54 aims to remove difficult geometric aspects that could cause artifacts for the upcoming steps of the process.

More precisely, said inappropriate parts comprises:
- parts of said global contour surrounding the inner part of the liver,
- parts of the global contour that has a high curvature, i.e., a curvature above a defined threshold, and/or
- parts of the contour that has a low contrast between the inner part and the outer part.

The removal of such inner part of the contour may be obtain by dividing the contour into two parts: the inner part of the contour and the outer part of the contour. The inner part of the contour may the part of the contour having the smallest distance with regard to a reference point in the image. The outer part may be the part of the contour having the largest distance with regard to a reference point in the image. The reference point may a corner of the image, for example the top left corner of said image.

The contrast at a specific part of the contour may be calculated by the difference or ratio of intensities between the pixels or voxels in a zone located outside said anatomical region (i.e. outside said contour - zone 62, in figure 6) and the pixels or voxels located in a zone located inside said anatomical region (zone 63, in figure 6).

More specifically, the contrast may be based on the mean intensities of the pixels in the corresponding surrounding zones outside and inside said anatomical region, i.e., outside and inside the contour. Said outside and inside zones may be obtained through dilatation or erosion of said contour.

After removing said inappropriate part of said contour, a further segmentation of the anatomical region may be performed on a region of interest surrounding the remaining actual contour, the actual contour being updated based on a detection of said actual contour from said further segmented anatomical region.

The further segmentation may be performed by Chan-Vese segmentation. The Chan-Vese segmentation algorithm is designed to segment objects without clearly defined boundaries. This algorithm is based on level sets that are evolved iteratively to minimize an energy, which is defined by weighted values corresponding to the sum of differences intensity from the average value outside the segmented region, the sum of differences from the average value inside the segmented region, and a term which is dependent on the length of the boundary of the segmented region. Such segmentation is known from "An Active Contour Model without Edges, Tony Chan and Luminita Vese, Scale-Space Theories in Computer Vision, 1999".

We then use the marching squares algorithm on the area segmented by Chan-Vese segmentation to obtain the updated contour line 71 (see Figure 7).

At step 55, the smoothed outer liver contour is computed, for example by applying a Savitzky-Golay filter.

Optionally, at step 56, a global quality check may be performed where a radiologist may have the option to manually review the selected liver contours with plotted distances from the smooth polynomial lines used to obtain LSN score.

At step 57, the distance between the updated actual contour and the smoothed contour is calculated. The distance between the actual contour and the smoothed contour may be determined using the Euclidean distance. For each point 'p' on the real liver contour, the distance to each point on the smoothed curve can be computed, and the point on the smoothed curve with the shortest distance from 'p' can be selected as the projection of 'p,' indicating the theoretical location of that point if the anatomical region were healthy.

A summary statistic may be computed. This summary may include information concerning the distribution of all distances (mean, median, minimal, and maximal distances, deciles).

At step 58, a liver surface nodularity (LSN) score is determined based on the above-mentioned distance.

It appears that the scores derived from this method closely align with those obtained through the established prior art process, illustrated in Figure 1. This method thus not only ensures the complete automation of score determination but also guarantees its reliability and accuracy.

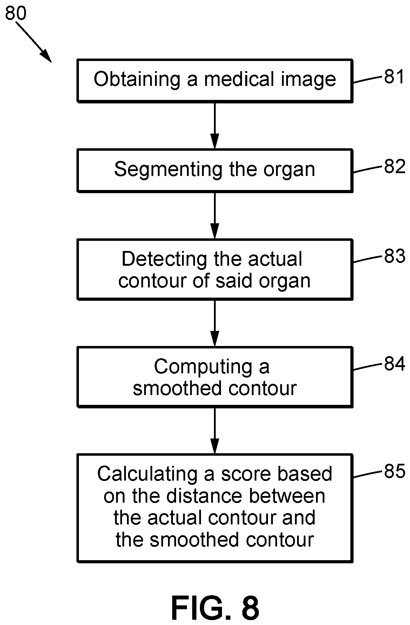

The generic method according to the present document is illustrated in the flow-chart 80 of figure 8, said method comprising the following steps:
- obtaining at least one medical image representing said anatomical region (step 81),
- segmenting said anatomical region or at least a part of said anatomical region (step 82),
- detecting the actual contour of said anatomical region from said segmented anatomical region (step 83),
- computing a smoothed contour of said anatomical region based on said actual contour (step 84),
- calculating a score based on the distance between the actual contour and the smoothed contour (step 85).

## Claims

**2.** A method implemented by computer means for quantifying irregularities of a surface of an anatomical region of a patient in at least one medical image, said method comprising the following steps:
(a) obtaining at least one medical image representing said anatomical region, and automatically performing:
(b) segmenting said anatomical region or at least a part of said anatomical region,
(c) detecting the actual contour of said anatomical region from said segmented anatomical region,
(d) computing a smoothed contour of said anatomical region based on said actual contour,
(e) calculating a score based on the distance between the actual contour and the smoothed contour.

**3.** The method according to preceding claim, wherein said image is a 3D image composed of a stack of slice, each slice forming a 2D image.

**4.** The method according to preceding claim, wherein step (b) is be performed on the 3D image and steps (c), (d) and (e) are performed on each 2D slice of a plurality of the slices of the 3D image.

**5.** The method according to any of the preceding claims, wherein the smoothed contour is be obtained by applying a Savitzky-Golay filter.

**6.** The method according to any of the preceding claims, wherein during step (b), segmentation is performed using a Unet model.

**7.** The method according to any of the preceding claims, wherein during step (c), the detection of the actual contour of said anatomical region is performed using a marching squares algorithm.

**8.** The method according to any of the preceding claims, wherein during step (c), inappropriate parts of said contour are excluded from said detected actual contour, to obtain a remaining actual contour, said inappropriate parts comprising parts of contour surrounding some parts of the anatomical region, parts of the contour that has a curvature above a defined threshold, and/or parts of the contour that has a low contrast between the inner anatomical region part and the outer anatomical region part.

**9.** The method according to the preceding claim wherein, after removing said inappropriate part of said contour, a further segmentation of the anatomical region is performed on a region of interest surrounding the remaining actual contour, the actual contour being updated based on a detection of said actual contour from said further segmented anatomical region.

**10.** A computer software, comprising instructions to implement at least a part of the method according the preceding claims when the software is executed by a processor.

**11.** A computer device comprising:
- an input interface to receive medical images,
- a memory for storing at least instructions of a computer program according to the preceding claim,
- a processor accessing to the memory for reading the aforesaid instructions and executing then the method according to any of the claims 1 to 8,
- an output interface to provide an indication based on said score.

**12.** Computer-readable non-transient recording medium on which a computer software is registered to implement the method according any of the claim 1 to 8, when the computer software is executed by a processor.
